# EUROPEAN PATENT APPLICATION

(11) **EP 2 124 260 A1**
(43) Date of publication of application: **25.11.2009**
(21) Application number: 08009212.5
(22) Date of filing: 20.05.2008
(51) Int. Cl.: H01L 31/042

(54) **Structural system with adjustable solar collectors**

(71) Applicant: DIAZ MAGRO, Tomas, 28220 Majadahonda Madrid (ES); JUNQUERA GARCIA DEL DIESTRO, Jeronimo, 28220 Majadahonda Madrid (ES)
(72) Inventor: DIAZ MAGRO, Tomas, 28220 Majadahonda Madrid (ES); JUNQUERA GARCIA DEL DIESTRO, Jeronimo, 28220 Majadahonda Madrid (ES)
(74) Representative: PROPI, S.L.

(57) **Abstract**

A structural system with adjustable solar collectors, it being dual-purpose, so that it achieves the production of shade, and at the same time the collection of solar energy for the exploitation thereof. The invention comprises a mesh-like load-bearing structure (1), preferably of tautened cables, these being of steel, synthetic fibres or any other similar material, wherein a plurality of solar energy collecting elements (2) are arranged, forming part of the system structure itself. Said collecting elements (2) are attached to the load-bearing structure (1) through suitable joining means (3) which permit their adjustment depending on the solar radiation.

## Description

### Structural system with adjustable solar collectors

### Object of the invention

The present invention consists of a structural system with adjustable solar collectors, it being dual-purpose, so that it produces shade, and at the same time it collects solar energy for the exploitation thereof. It comprises a mesh-like load-bearing structure with a plurality of solar energy collecting elements which form part of the structure of the system and which are attached thereto by any suitable linking means.

In this way, shade is obtained which creates a new area, improving existing areas and encouraging new uses. By means of its application we will obtain both thermal and spatial comfort, and additionally a micro-climate may be created.

### Background of the invention

On many occasions we find open spaces in which we find ourselves exposed to the radiation of the sun, such as streets, large parking lots, public parks, etc. This, in addition to causing discomfort and inconvenience when it is necessary to remain in said spaces for a lengthy period of time, is damaging to health, as we are exposed to solar radiation. In the same way, the surface of the planet is also exposed to solar radiation. The intensity of the radiation depends at each moment on the angle formed by the normal to the surface at the point in question, and on the direction of the incidence of the solar rays. At each point on the planet, considered locally, the slope of the surface regarding said rays depends on the latitude and on the time of day for a particular location in longitude.

Furthermore, due to the need for renewable energy, large solar farms are being constructed, which convert the land whereon they are installed, including irrigated land, into unusable deserts.

With regard to the above, we find ourselves on the one hand with the need to take into account in some way the lengthy exposures to the sun in order to prevent this harm to health, even improving the quality of these open spaces, and on the other hand, the possible exploitation of this solar radiation without rendering unusable the land whereon it is installed. Additionally, depending on the slope and the time of day, we find ourselves with a greater or lesser exposure to the radiation.

In the current solutions for generating shade, an area is created and subsequently, if it is desired to exploit the solar energy, the collecting elements are superimposed. The great difference between these systems and the invention proposed is that it is the solar energy collector itself is the generator of the shaded area created; i.e. said collecting elements are built into the structure of the area, and not superimposed. In the same way, the structure itself may be arranged in a curved shape, adjusting the solar collecting elements, so that the collection of energy may be optimised.

### Description of the invention

The invention proposed consists of a structural system with adjustable solar collectors, so that it offers protection from solar radiation while at the same time it collects the solar energy for the exploitation thereof, without rendering unusable the area whereover it is installed.

This is a flexible structural system, which may be attached at different heights with no increase in cost, and which allows the installation of the energy collectors with ease. Said collectors may be adjusted with ease, independently of the structural elements. Furthermore, the system allows alternation between total and no coverage, achieving different degrees of shade simply by separating the solar collectors by more or less.

The invention submitted may be applied to any area whose activity requires shade. Its application should be borne in mind in those locations where the solar radiation is of a sufficient level throughout the year for the solar energy collected to make the system cost-effective, and that the shade throughout the year should improve the conditions of the area whereover it is installed.

The degree of shade will depend on the requirements defined for the use of the shaded area, it being possible for said shade to be uniform and continuous, a filter which will reduce the radiation by a percentage, a diffused light which will allow the collection of the northern light, or even being permeable to different degrees of ventilation. In this way, it is intended to achieve a level of shade which bestows extra quality on the area whereover it is installed, protecting the activity which may be carried out therein or creating a micro-climate.

A significant characteristic of the invention is that it is the collector itself which will generate the area created, i.e. that the solar energy collectors are built into the constituting elements of the structure, in comparison with the current solutions in which first an area is created and subsequently the collectors are superimposed.

Another fundamental characteristic of the invention consists of the possibility of adjusting the solar energy collection elements so that 100% efficacy is obtained.

The system is able to be adapted to different spatial designs in accordance with the nature of the area to be covered or with the creativity of the person who designs the protected area.

The solar energy collected may be sold to the general power network, stored for its use in the same area in which it is generated, for example for the illumination thereof, or for giving new added value, such as supplying small air purifying equipment in order to fight pollution, or small waste water treatment plants in order to re-use the water from the drainage system for irrigation. Depending on the dimensions of the area, it might even be possible to offer both its installation and its maintenance in exchange for the energy produced, so that the owner of the land would secure an improvement of the area at no cost.

The system proposed has a large number of applications due to its great versatility. It could thus be used in the parking lots of large shopping centres, both in the traffic lanes, in the parking spaces and in the pedestrian pathways. It may also be applied to motorways, which need ever more illumination, in order to improve their safety during the day and to provide self-supporting illumination at night. And finally, it may be applied to any open-air space: sports areas, festival grounds, avenues, etc.

### Description of the drawings

To complement the description executed herein, and with the objective of aiding a better understanding of the characteristics of the invention, in accordance with a preferred example of a practical embodiment thereof, a set of drawings is attached to said description as an integral part thereof, in which, for illustrative but non-limitative purposes, the following is portrayed:

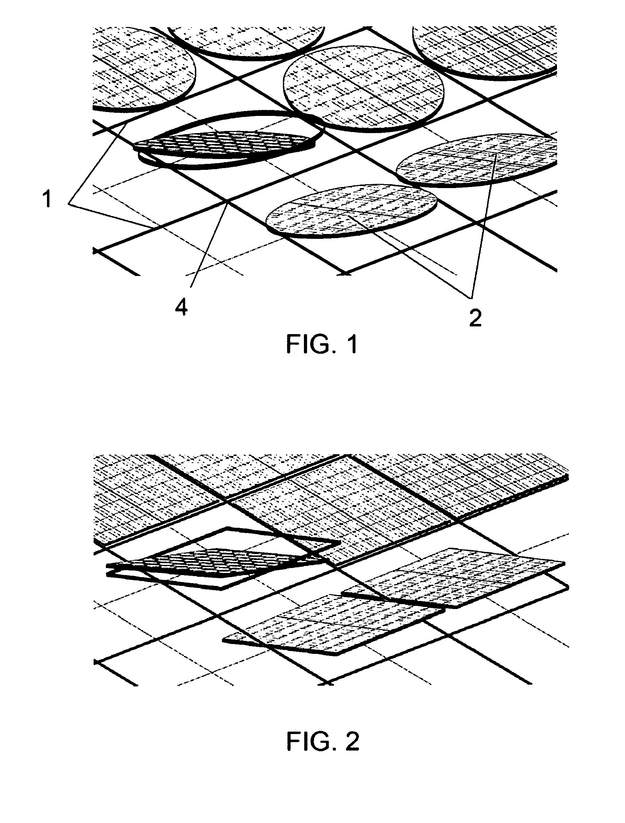

Figure 1.- portrays a perspective view of the structural system with circular panels.
Figure 2.- portrays a perspective view of another preferred embodiment of the invention, with square panels.

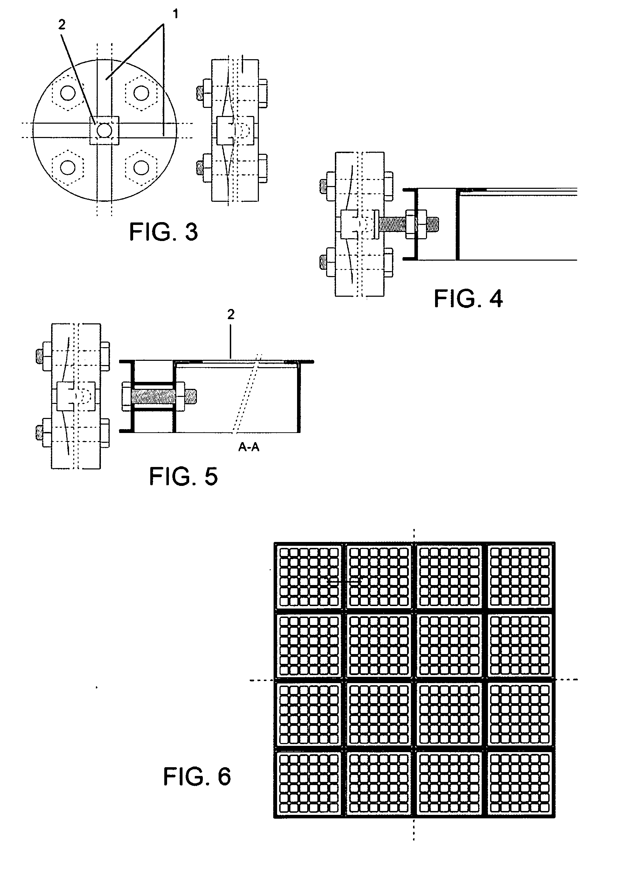

Figure 3.- portrays a view of a preferred mechanical linking element (cardan joint), wherein it is possible to see the disc where the cables cross in a plan view (left) and a side view (right), i.e. the attachment of the cardan joint to the cable.
Figure 4.- portrays a view of the attachment of the cardan joint to the cable.
Figure 5.- portrays a diagram of the rotation of the photovoltaic panel by means of the cardan joint.
Figure 6.- portrays an assembly of the invention with square panels.

### Preferred embodiment of the invention

The invention consists of a load-bearing structure (1) in the form of a mesh, preferably of tautened cables, these being of steel or of synthetic fibres. The solar collecting elements (2) are superimposed within this mesh, with a greater or lesser density in accordance with the degree of shade required. The aforementioned load-bearing structure has the advantage that it may be installed at any height with no increase in cost.

The assembly of the structure will form curved surfaces, at the discretion of the designer, it not being necessary for them to coincide with the optimal orientation for catching the sun, but they will arise from the maximum structural efficacy, or from creativity, in order to create the area.

The attachment of the collecting elements (2) to the load-bearing structure (1) is carried out by mechanical linking means (3), with the special feature that said mechanical linking means (3) allow the assembly, disassembly and adjustment of the collecting elements depending on the solar radiation.

In a preferred embodiment of the invention, the mechanical linking means (3) consist of a number of mechanical ball joints anchored at the junctions (4) of the load-bearing structure (1). The linking means (3) materialise in the same junctions (4), which will contain the collecting element (2), which will turn on an axle, these being motorised, thus permitting optimal daily adjustment. The framework of the structure will be used in order to conduct the energy collected, in addition to providing the surface whereover it is installed with shade, and the supports shall be designed in order to provide a solution to the mechanical requirements and in accordance with the uses to which the energy collected will be devoted (connections to the power network, accumulators for nocturnal illumination, or others).

In another preferred embodiment, the mechanical linking means (3) consist of a number of photovoltaic cardan joints, which permit, thanks to their two rings or squares, all possible orientations; although these may not be perpendicular to the angle of incidence, this is achieved by means of the cardan joint, which turns in both directions: north-south axis and east-west axis. This second preferred embodiment is mechanised and motorised; for this reason the level of solar absorption will be 100%, without wasting a single minute at its perpendicular position.

The panels, on their internal side, may be used in order to add quality to the area, with the introduction of colours, information, advertising, etc., or using them as a device for reflected illumination.

The present description of the invention has been carried out in a representative and in no way limitative manner, it being possible for the structural system to adopt any shape, type of linking means, colour, configuration or the suchlike, with the provision that the fundamental object of the invention shall not be altered.

## Claims

1. A structural system with adjustable solar collectors, **characterised in that** it comprises a load-bearing structure (1) in the form of a mesh, preferably of tautened cables, these being of steel, synthetic fibres or any other similar material, wherein a plurality of solar energy collecting elements (2) are arranged, forming part of the system structure itself.

2. A structural system with adjustable solar collectors, according to claim 1, **characterised in that** the collecting elements (2) are linked to the load-bearing structure (1) by mechanical linking means (3), so that they may be assembled, disassembled and adjusted depending on the solar radiation (and remaining in a fixed position).

3. A structural system with adjustable solar collectors, according to preceding claims, **characterised in that** the mechanical linking means (3) for the energy collecting elements (2) are mechanical ball joints, located at the junctions (4) of the load-bearing structure (1).

4. A structural system with adjustable solar collectors, according to claims 1 and 2, **characterised in that** the linking means (3) for the energy collecting elements (2) consist of a number of photovoltaic cardan joints, which allow orientation in all directions.

5. A structural system with adjustable solar collectors, according to claim 4, **characterised in that** it is mechanised and motorised, achieving a 100% level of solar absorption.
